# EUROPEAN PATENT APPLICATION

(11) **EP 1 207 689 A1**
(43) Date of publication of application: **22.05.2002**
(21) Application number: 00951980.2
(22) Date of filing: 14.08.2000
(51) Int. Cl.: H04N 5/64, G09F 9/00, G02B 27/02

(54) **HEAD-MOUNTED VIDEO DISPLAY**

(30) Priority: 25.08.1999 JP 23861399; 04.10.1999 JP 28306599
(71) Applicant: Olympus Optical Co., Ltd., Tokyo 151-0072 (JP)
(72) Inventor: OGASAWARA, Yuji, Hachioji-shi, Tokyo 192-0911 (JP); KONDO, Etsuyasu, Hino-shi, Tokyo 191-0032 (JP); KIYOKAWA, Izuru, Machida-shi, Tokyo 194-0212 (JP)
(74) Representative: von Hellfeld, Axel, Dr. Dipl.-Phys.
(86) International application number: JP0005436
(87) International publication number: WO0115439

(57) **Abstract**

A compact head-mounted image display device consumes little power and consists mainly of transmissive LCDs (15), backlights (17), free-form surface prisms (11), a circuit board (18), flexible printed-circuit boards (20 and 19), and connectors (20a and 19a). The transmissive LCDs display images. The backlights adopt LEDs as light sources so as to radiate white illumination light, which results from the luminescence of the surfaces of the backlights, to the LCDs. The free-form surface prisms reflect the light twice, which represents images and is radiated from the LCDs illuminated by the backlights, so as to route the light to the user's eyes. The circuit board is a single rigid substrate on which control circuits for controlling the backlights and LCDs respectively are mounted. The backlights and LCDs are connected to the circuit board through the connectors over the flexible printed-circuit boards so that the backlights and LCDs can be disconnected freely.

## Description

### Technical Field

The present invention relates to a head-mounted image display device, or more particularly, to a head-mounted image display device to be used to view displayed images while being worn on the head.

### Background Art

Conventionally, image display devices employing a cathode-ray tube (CRT) have been widely adopted. Image display devices employing a liquid crystal display are occupying a larger market share these days.

Among the image display devices, a head-mounted image display device that is worn like a mask on the user's head gains an advantage over the other portable image display devices. This is because the head-mounted image display device enables a user to view images with his/her hands left free. Moreover, the images to be viewed are realistic and appealing because the field of view is the same as the one provided by a display device having a large screen.

Various types of head-mounted image display devices have been proposed and commercialized one after another in recent years. For example, images produced on a transmissive LCD or the like illuminated from behind by a flat fluorescent backlight that has a fluorescent tube incorporated therein are routed to an optical system via an optical filter, and projected on the user's eyes via the optical system.

The backlight having a built-in fluorescent tube requires a high voltage to glow. A step-up circuit or the like is therefore needed. A large area on a circuit board must be made available in order to mount the step-up circuit of a considerable size. For this reason, a circuit board dedicated to the backlight must therefore be sometimes included. In this case, since a circuit board on which a circuit for driving an LCD is needed additionally, two circuit boards can be incorporated in a head-mounted image display device. From this viewpoint, it can be said that there is room for further reduction in the size and weight of the head-mounted image display device.

Since the foregoing head-mounted image display device is a portable device to be worn on the head, a further reduction in the weight and power consumption is required, and technology for satisfying this requirement is in demand.

The present invention attempts to break through the foregoing situations. An object of the present invention is to provide a head-mounted image display device that is more compact and consumes less power.

### Disclosure of Invention

In order to accomplish the above object, according to the first aspect of the present invention, there is provided a head-mounted image display device to be used to view displayed images while being worn on the head. The head-mounted image display device consists mainly of an image display means, a surface-luminescence illuminating means, and an optical system. The image display means produces images according to a received video signal. The surface-luminescence illuminating means uses an LED as a light source to radiate white illumination light on the image display means. The optical system routes light, which represents images and is radiated from the image display means illuminated by the surface-luminescence illuminating means, into the user's eyes so that the images will be visible.

According to the second aspect of the present invention, there is provided a head-mounted image display device having, in addition to the same components as those of the head-mounted image display device in accordance with the first aspect, a circuit board on which a control circuit for controlling the surface-luminescence illuminating means is mounted. The surface-luminescence illuminating means is connected to the circuit board via a connector over a flexible printed-circuit board so that it can be disconnected freely.

Furthermore, according to the third aspect of the present invention, there is provided a head-mounted image display device having the same components as those of the head-mounted image display device in accordance with the second aspect. Herein, the circuit board on which a control circuit for controlling the image display means is also mounted is formed with a single rigid substrate.

According to the fourth aspect of the present invention, there is provided a head-mounted image display device having the same components as those of the head-mounted image display device in accordance with the first aspect. Herein, the optical system is a prism optical system having two reflecting surfaces that include a reflecting surface formed with a free-form surface.

According to the fifth aspect of the present invention, there is provided a head-mounted image display device having the same components as those of the head-mounted image display device in accordance with the second aspect. Herein, the image display means and surface-luminescence illuminating means are a pair of image display means and a pair of surface-luminescence illuminating means so that the image display means and surface-luminescence illuminating means can be opposed to the right and left eyes. The control circuit includes a luminance control circuit that controls the luminance of the surface-luminescence illuminating means opposed to the right eye and the luminance of the surface-luminescence illuminating means opposed to the left eye.

According to the sixth aspect of the present invention, there is provided a head-mounted image display device having the same components as those of the head-mounted image display device in accordance with the fifth aspect. Herein, the luminance control circuit includes an absolute luminance control circuit that simultaneously controls the luminance of the surface-luminescence illuminating means opposed to the right eye and the luminance of the surface-luminescence illuminating means opposed to the left eye.

According to the seventh aspect of the present invention, there is provided a head-mounted image display device having the same components as those of the head-mounted image display device in accordance with the fifth aspect. Herein, the luminance control circuit includes a luminance balance control circuit that controls the relative luminances of the surface-luminescence illuminating means each opposed to the right and left eyes.

### Brief Description of the Drawings

Fig. 1 is a perspective view showing a head-mounted image display device in accordance with an embodiment of the present invention and a controller from the front sides thereof;
Fig. 2 is a perspective view showing an image display system, which is included in the head-mounted image display device in accordance with the embodiment, with components thereof assembled;
Fig. 3 is a perspective view showing the image display system, which is included in the head-mounted image display device in accordance with the embodiment, with the components thereof disassembled;
Fig. 4 is a longitudinal sectional view showing the internal components of the head-mounted image display device in accordance with the embodiment including the image display system;
Fig. 5 is a longitudinal sectional view showing the structure of a backlight employed in the embodiment;
Fig. 6 is a block diagram showing a major portion of the electrical configuration of the head-mounted image display device in accordance with the embodiment that is connected to the controller; and
Fig. 7 is a circuit diagram showing the circuit elements of a luminance control circuit employed in the embodiment.

### Best Mode for Carrying Out the Invention

Referring to the drawings, an embodiment of the present invention will be described below.

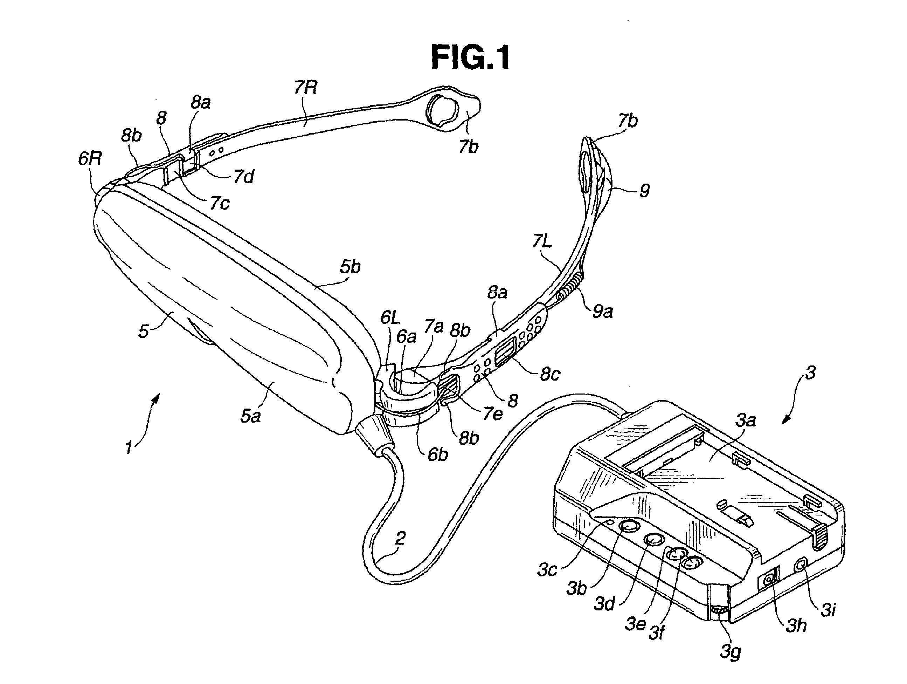

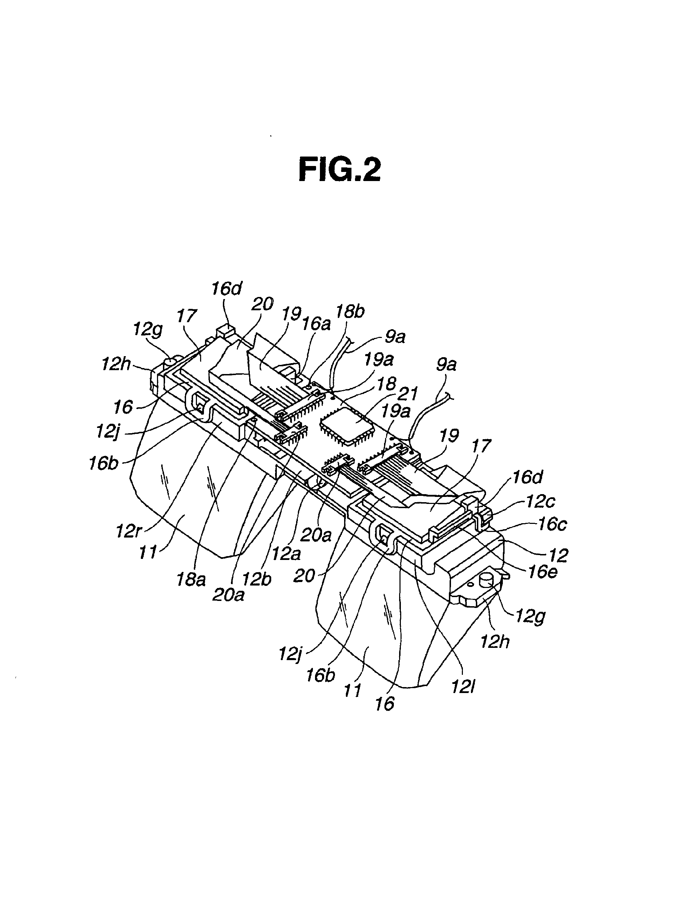

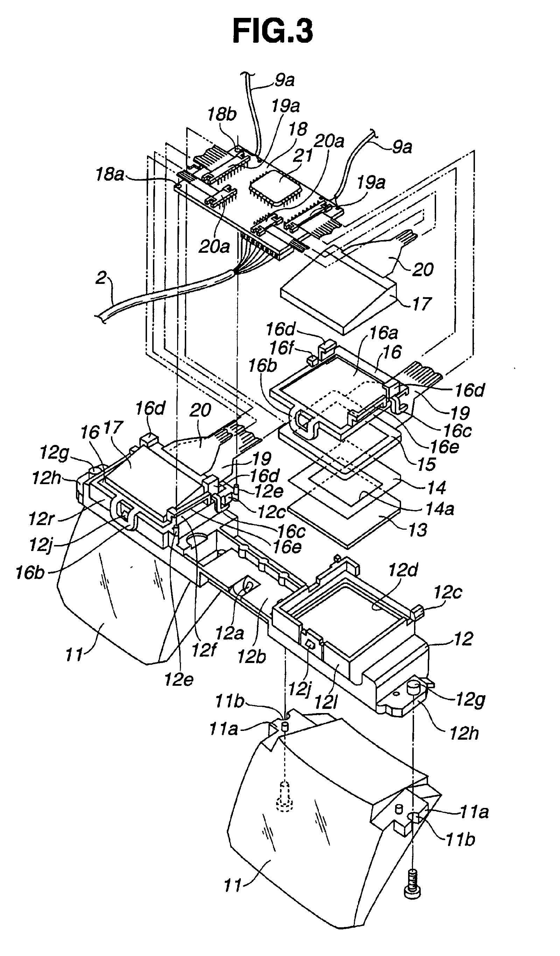

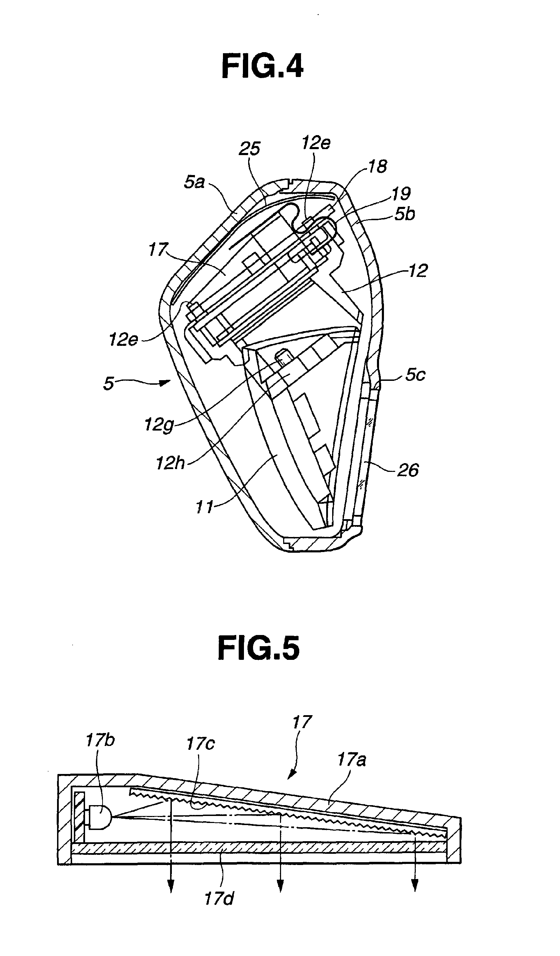

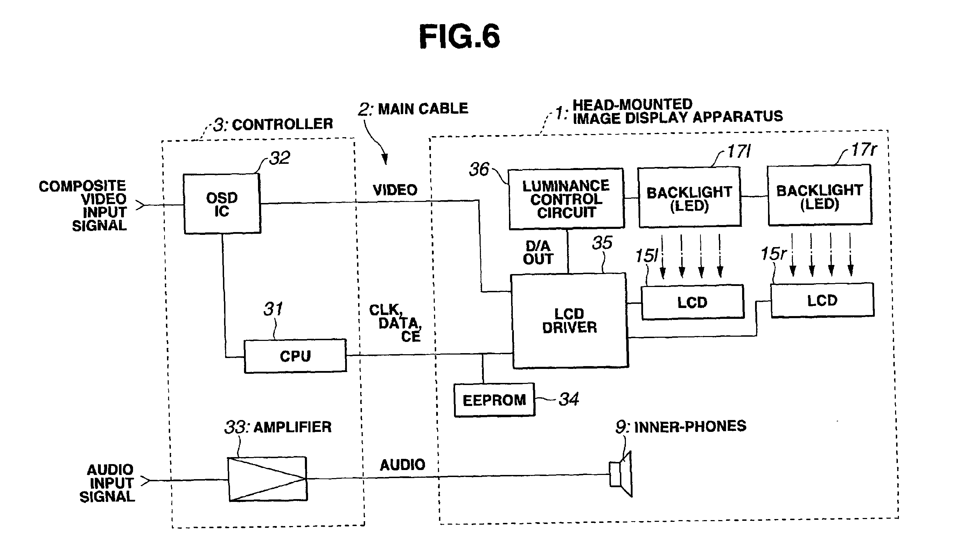

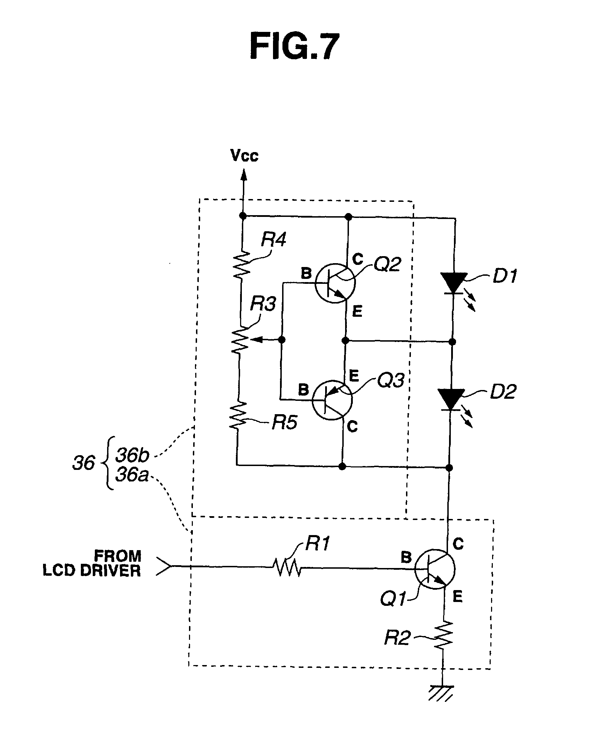

Fig. 1 to Fig. 7 show an embodiment of the present invention. Fig. 1 is a perspective view showing a head-mounted image display device and a controller from the front sides thereof. Fig. 2 is a perspective view showing an image display system included in the head-mounted image display device with the components thereof assembled. Fig. 3 is a perspective view showing the image display system included in the head-mounted image display device with the components thereof disassembled. Fig. 4 is a longitudinal sectional view showing the internal components of the head-mounted image display device including the image display system. Fig. 5 is a longitudinal sectional view showing the structure of a backlight. Fig. 6 is a block diagram showing a major portion of the electrical configuration of the head-mounted image display device that is connected to the controller. Fig. 7 is a circuit diagram showing the circuit elements of a luminance control circuit.

As shown in Fig. 1, a head-mounted image display device 1 consists mainly of a main body 5, joint members 6L and 6R, head-side supporting frames 7L and 7R, right and left inner-earphones 9, inner-earphone cables 9a, and sliding adjusters 8. The main body 5 has a built-in image display system enclosed in a front cover 5a and a rear cover 5b. The joint members 6L and 6R are fixed to the right and left edges of the main body 5. The head-side supporting frames 7L and 7R are attached to the joint members 6L and 6R so that they can pivot on the joint members to meet each other. The right and left inner-earphones 9 are, if necessary, stored in inner-earphone holders 7b that will be described later and that are formed as parts of the head-side supporting frame 7L and 7R. An audio signal is transmitted to the inner-earphones 9 over the inner-earphone cables 9a. The sliding adjusters 8 are slid over the head-side supporting frames 7L and 7R and sandwiched between the head-side supporting frames 7L and 7R and the joint members 6L and 6R. Moreover, the head-mounted image display device 1 includes a nose rest member that can be extended from or collapsed on the main body 5, though the nose rest member is not illustrated. The nose rest member is abutted on the bridge of the user's nose, thus supporting the main body 5 in cooperation with the head-side supporting frames 7L and 7R.

The joint members 6L and 6R have pivot receptors 6a formed as parts thereof. The pivot receptors 6a bear the head-side supporting frames 7L and 7R so that the head-side supporting frames can pivot freely. The joint members 6L and 6R have grooves 6b, in which the inner-earphone cables 9a are fitted, formed in the outer surfaces thereof.

The head-side supporting frames 7L and 7R have pivoting portions 7a, inner-earphone holders 7b, grooves 7e, advancement stoppers 7c, and withdrawal stoppers 7d. The pivoting portions 7a are engaged with the pivot receptors 6a of the joint members 6L and 6R. The inner-earphone holders 7b are formed at ends of the head-side supporting frames 7L and 7R opposite to the ends thereof formed as the pivoting portions 7a. The inner-earphones 9 are stored or held in the inner-earphone holders 7b if necessary. The grooves 7e are formed in the outer surfaces of the head-side supporting frames 7L and 7R so that the inner-earphone cables 9a can be fitted therein. The advancement stopper 7c and withdrawal stopper 7d are partitioned with a rib or the like and used to define a position to which the sliding adjuster 8 is advanced and a position to which the sliding adjuster 8 is withdrawn.

The sliding adjusters 8 each include a stop claw 8a, an angular displacement restriction claw 8b, and a rectangular hole 8c. The stop claw 8a is engaged selectively with the advancement stopper 7c and withdrawal stopper 7d of the head-side supporting frame 7L or 7R. When the stop claw 8a is engaged with the advancement stopper 7c, the angular displacement restriction claw 8b is sandwiched between the pivot receptor 6a of the joint member 6L or 6R and the pivoting portion 7a of the head-side supporting frame 7L or 7R. The angular displacement restriction claw 8b thus restricts an angle of opening, by which the head-side supporting frame 7L or 7R opens, to a small angle. The rectangular hole 8c is formed as part of the head-side supporting frame 7L or 7R in order to reduce the weight thereof.

The freely detachable sliding adjusters 8 are provided on the outer surfaces of the head-side supporting frames 7L and 7R. The inner-earphone cables 9a fitted in the grooves 7e are hidden behind the sliding adjusters 8, whereby the inner-earphone cables 9a and inner-earphones 9 alike are positioned on the temples for fear they may hang down and obstruct the user's vision.

Moreover, a main cable 2 over which a video signal and an audio signal are transmitted to the head-mounted image display device 1 is extended from the lower part of the joint member 6L of the head-mounted image display device 1. The head-mounted image display device is connected to a controller 3, which controls images and sounds to be transferred to the head-mounted image display device 1, over the main cable 2.

The controller 3 consists mainly of a battery mount 3a, a power switch 3b, a power LED 3c, a menu button 3d, a Down button 3e, an Up button 3f, a volume dial 3g, a DC input terminal 3h, and an AV input terminal 3i. A battery is mounted on the battery mount 3a so that it can be dismounted freely. The power switch 3b is pressed in order to turn on a power supply. The power LED 3c glows when the power supply is turned on, and visually informs a user of the fact that the power supply is turned on. The menu button 3d is used to present a menu or finalize a selection of a menu item. The Down button 3e and Up button 3f are used to move a desired menu item among the displayed menu items by manipulating the menu button 3d. The volume dial 3g is used to adjust the volume available for the inner-earphones 9. The DC input terminal 3h is used to receive power from an AC adapter. The AV input terminal 3i is used to receive an audiovisual (AV) signal from a video source such as a DVD player or a TV tuner.

Next, the components of an image display system will be described with reference to Fig. 2 and Fig. 3.

The image display system has a pair of right and left backlights 17, a pair of right and left liquid crystal displays (LCDs) 15, and a pair of right and left prisms 11 placed on an optical system holding member 12. The backlights 17 are white flat emissive LED units serving as a surface-luminescence illuminating means. The LCDs 15 serve as an image display means for producing images according to a received video signal. The prisms 11 serve as an optical system for routing light to the user's eyes. The light represents images produced on the LCD modules 15 illuminated by the backlights 17. Moreover, a circuit board 18 on which a control circuit for controlling the LCDs 15 and a control circuit for controlling the backlights 17 are mounted is placed on the optical system holding member 12.

The optical system holding member 12 has an optical system holder 12r, which is opposed to the right eye, and an optical system holder 121, which is opposed to the left eye, integrated with each other using a coupler 12b. The optical system holding member 12 is fixed to the rear cover 5b by tightening a screw inserted into a fastener 12a formed as the substantial center of the coupler 12b.

A light propagation window 12d that is a rectangular hole is formed in each of the optical system holders 12r and 121 of the optical system holding member 12. A locking projection 12c is formed at each of the right and left corners of the perimeter of the light propagation window 12d. Another locking projection 12j is formed in the center of the side of the perimeter opposed to the side having the stoppage projections 12c.

A position restriction pin 12e used to position and secure the circuit board 18 is projected from two corners of the optical system holder 12r opposed to the right eye which adjoin the coupler 12b.

Furthermore, receptors 12h into which engaging convex parts 11a of the prisms 11 that will be described later are fitted are formed at the right and left edges of the optical system holding member 12. Bosses 12g are projected from the upper surfaces of the receptors 12h. Each of the bosses 12g has a screw hole, that is, has a screw threaded in the inner wall of a hollow thereof.

Likewise, the right and left edges of the lower surface of the coupler 12b of the optical system holding member 12 are shaped in conformity with the engaging convex parts 11a of the prisms 11 so that the right and left edges will be engaged with the engaging convex part 11a.

The prisms 11 are formed with so-called free-shaped prisms. The free-shaped prism has a free-form surface and can offer high optical performance while being designed to be compact and lightweight. The prisms 11 reflect the light representing images produced on the LCD 15 twice, and then propagates the light to the user's eyes.

Each of the prisms 11 has the engaging convex parts 11a formed at the right and left upper edges thereof. A U groove 11b into which a screw is inserted is formed in each of the engaging convex parts 11a. The engaging convex parts 11a are engaged with the receptors 12h and coupler 12b, and a screw is inserted into each of the screw holes bored in the bosses 12g and the screw hole bored in the lower surface of the coupler 12b. Thus, the prisms 11 are fixed to the optical system holding member 12.

On the other hand, each of the right and left optical system holders 12r and 12l of the optical system holding member 12 has a low-pass filter 13, a mask member 14, the LCD 15, a backlight holding frame 16, and the backlight 17 stacked in that order from bottom to top. The low-pass filter 13 removes unnecessary high-frequency components of light. The mask member 14 has a rectangular hole 14a and restricts propagation of unnecessary light such as light that results in a flare which is a phenomenon. The backlight holding frame 16 protects and shields the LCD 15, and secures the LCD 15 in place. The backlight holding frame 16 is used to attach the backlight 17 to the optical system holding member 12.

The low-pass filter 13 and mask member 14 each have one of the four corners thereof cut obliquely for fear they should be oriented in a different direction.

The backlight holding frame 16 made of a transparent resin or the like has a light transmitting surface 16a, a distal engaging portion 16b, a pair of right and left proximal engaging portions 16c, a pair of right and left locking claws 16d, a fixture portion 16e, and a fixture portion 16f. The distal engaging portion 16b is engaged with the locking projection 12j of the optical system holding member 12. The pair of right and left proximal engaging portions 16c is engaged with the locking projections 12c of the optical system holding member 12. The pair of right and left locking claws 16d clamps and locks the backlight 17. The fixture portion 16e of the backlight holding frame 16 opposed to the right eye clamps one edge of the circuit board 18 in accordance with the upper edge 12f of the optical system holder 12r, and thus secures the edge of the circuit board 18. The fixture portion 16f of the backlight holding frame 16 opposed to the left eye clamps the other edge of the circuit board 18 in accordance with the upper edge of the optical system holder 121, and thus secures the other edge of the circuit board 18.

The backlight holding frames 16 opposed to the right and left eyes have the same shape, and are molded using the same dies. This leads to reduced costs.

The backlight 17 is locked in the backlight holding frame 16 with the right and left edges thereof clamped by the locking claws 16d. At this time, the luminescent surface of the backlight 17 is opposed to the light transmitting surface 16a.

A flexible printed-circuit board 19 is extended from the LCD 15, and a flexible printed-circuit board 20 is extended from the backlight 17. The distal ends of the flexible printed-circuit boards 19 and 20 are spliced to connectors 19a and 20a respectively that are mounted on the circuit board 18, and thus fixed to the circuit board 18.

The circuit board 18 is formed with a rigid substrate on which a control circuit 21 for controlling the LCDs 15 and a control circuit for controlling the backlights 17 are mounted. Moreover, the inner-earphone cables 9a and main cable 2 are coupled to the circuit board 18.

The circuit board 18 is much smaller than a conventional one owing to the structure of the backlight 17 that will be later described. The circuit board 18 is placed on the coupler 12b that links the left optical system holder 12l and the right optical system holder 12r.

Specifically, a hole 18a and an oblong hole 18b into which the position restriction pins 12e are fitted are formed at two corners of the circuit board 18 that adjoin the optical system holder 12r. By fitting the position restriction pins 12e into the holes 18a and 18b, the circuit board 18 is positioned.

The circuit board 18 is clamped by the upper edge 12f of the optical system holder 12r and the fixture portion 16e, and also clamped by the upper edge of the optical system holder 12l and the fixture portion 16f. Thus, the circuit board 18 is fixed to the optical system holding member 12.

The foregoing image display system is, as shown in Fig. 4, enclosed in the front cover 5a and rear cover 5b, and thus stored in the main body 5.

An anti-static film 25 is placed outside the backlight 17, whereby extraneous static electricity is shut out in order to protect the internal circuits.

Moreover, the rear cover 5b has eyepiece windows 5c covered with transparent plates 26. Images projected from the prisms 11 are viewed through the eyepiece windows 5c.

Furthermore, the backlight 17 is, as described later, tapered so that when the backlight 17 is seen laterally, it will be found that one edge portion thereof is thicker than the other edge portion thereof. Since the front cover 5a is shaped to incline to the front edge thereof, the backlight 17 is placed so that the thin edge portion thereof will come to the front edge.

Next, the structure of the backlight 17 will be described with reference to Fig. 5.

As described in relation to the related art, conventionally, a white flat fluorescent screen is used to construct a backlight. In contrast, the backlight 17 employed in the present embodiment adopts an LED as a light source and has the structure described below.

Specifically, the backlight 17 is substantially tapered so that when the backlight is seen laterally, one edge portion thereof will be found to be thinner than the other edge portion thereof. One LED 17b or a plurality of LEDs 17b is placed in the thick edge portion of a casing 17a of the backlight 17. The LED 17b emits light having a relatively short wavelength (for example, blue light).

Light emitted from the LED 17b is radiated on a fluorescent scattering and reflecting plate 17c bonded to the inner surface of the inclined part of the casing 17a. Consequently, homogeneous white light is reflected from the fluorescent scattering and reflecting plate 17c.

The homogeneous white light is radiated on the LCD 15 through an emission glass surface 17d. The emission glass surface 17d may be formed as a scattering and transmitting surface. In this case, the reflecting surface may be formed as a mere fluorescent surface. If the emission glass surface 17d is formed as the scattering and transmitting surface, this causes the merit by which dust or the like adhering to the surface becomes obscure.

As mentioned above, the LED 17b that glows in blue or the like is used to radiate white light from the fluorescent scattering and reflecting plate. Alternatively, a white LED formed by coating a fluorescent material over the surface of a chip may be adopted.

Moreover, the backlights 17 opposed to the right and left eyes are included. An external tester or the like is used to detect the luminances of the backlights in the course of manufacturing. The head-mounted image display device is not delivered as a product from a factory until the luminances of the right and left backlights are adjusted to have a null difference. A memory in which the data acquired during the adjustment is stored and which serves as an adjusting means is mounted on the circuit board 18.

Unlike a backlight that adopts a fluorescent tube as a light source, the backlight 17 having the foregoing structure consumes little power because it adopts the LED 17b as a light source.

Furthermore, unlike the fluorescent tube, the LED 17b does not require high voltage. The LED 17b is caused to glow with low voltage of, for example, about 5 V. Therefore, no noise is generated, and little heat is dissipated. The LCD 15 is therefore hardly affected by a temperature change.

Since an inverter is not needed, it is unnecessary to include a circuit board dedicated to backlights. According to the present embodiment, the circuit board 18 that is a rigid substrate is solely employed.

Owing to the efforts made to realize a compact lightweight design, the head-mounted image display device produced by the present applicant weighs, for example, 90 g or less. Since a conventional product that adopts a fluorescent tube as a backlight weighs about 110 g, the head-mounted image display device has realized a considerable reduction in size and weight.

Moreover, when the plurality of LEDs 17b is included, an amount of light can be readily varied by changing the number of LEDs 17b to be lit.

For the higher luminance of the backlight, the number of LEDs 17b should be increased. However, the larger the number of LEDs, the higher the costs. The head-mounted image display device 1 in accordance with the present embodiment employs, as mentioned above, a free-shaped prism. Light representing an image produced on the LCD 15 is reflected twice and then radiated through a transparent plate 26. There is the merit of attenuating a small amount of light, compared with the case where light must be reflected four times when a concave optical system is adopted. Consequently, the number of LEDs 17b does not have to be very large. Nevertheless, an amount of light that is large enough to view images can be ensured. Consequently, the increase in costs can be suppressed. The backlight 17 adopting the LED 17b as a light source can be used in combination with the prism 11 having a free-form surface.

The backlight 17 is so structured as a unit and connected to the circuit board 18 by splicing the flexible printed-circuit board 20 to the connector 20a mounted on the circuit board 18 that can be disconnected, to be readily replaced with another in its repairs or the other occasions.

Likewise, the LCD 15 is so connected to the circuit board 18 by splicing the flexible printed-circuit board 19 to the connector 19a mounted on the circuit board 18 that can be disconnected to be readily replaced with another.

As mentioned above, the tapered backlight 17 is placed in conformity with the outline of the head-mounted image display device 1 with the thin edge portion thereof oriented to the outside and the thick edge portion thereof oriented to the user's head. The present invention is not limited to this placement. The backlight 17 may be placed in an opposite manner according to the arrangement of the components of an optical system, circuitry, or any other design-related necessity.

Referring to Fig. 6, the electric configuration of the head-mounted image display device connected to the controller will be described below.

The controller 3 consists mainly of an on-screen display circuit (OSDIC) 32, a CPU 31, and an amplifier 33. The on-screen display circuit 32 superposes character information or the like on a composite video signal received as a video signal, and transfers the resultant signal as a video signal VIDEO. The CPU 31 controls the on-screen display circuit 32 and other circuits, and produces a clock pulse CLK, a data signal DATA, and a chip enabling signal CE. The amplifier 33 amplifies an audio signal received as an audio signal according to a manipulation performed on the volume dial 3g.

The video signal VIDEO produced by the on-screen display circuit 32, the clock pulse CLK, data signal DATA, and chip enabling signal CE produced by the CPU 31, and the audio signal AUDIO produced by the amplifier 33 are transmitted to the head-mounted image display device 1 over the main cable 2.

The head-mounted image display device 1 consists mainly of an LCD driver 35, a pair of right and left LCDs 15r and 15l, a luminance control circuit 36, backlights 17r and 17l, an EEPROM 34, and the inner-earphones 9. The LCD driver 35 receives the video signal VIDEO, clock pulse CLK, data signal DATA, and chip enabling signal CE, and drives the LCDs 15r and 15l and backlights 17r and 17l. The LCDs 15r and 15l are opposed to the right and right eye and driven by the LCD driver in order to produce images. The luminance control circuit 36 controls the luminances of the backlights 17r and 17l in response to a luminance control signal (D/A OUT) that is an analog signal transferred from the LCD driver 35. The backlights 17r and 17l have the absolute luminances and relative luminances thereof controlled by the luminance control circuit 36, and glow to illuminate the LCDs 15r and 15l. The EEPROM 34 is connected to the LCD driver 35 and CPU 31. Setting data relevant to images to be displayed on the LCDs 15r and 15l, and initialization data relevant to the luminances of the backlights 17r and 17l are stored in the EEPROM 34. User-designated data concerning the luminances of the backlights 17r and 17l and the contrasts of images which is modified using the buttons on the controller 3 is also stored in the EEPROM 34. The inner-earphones 9 generate sounds in response to the audio signal AUDIO transferred from the amplifier 33.

The LCD driver 35 and EEPROM 34 that are circuit elements, and the luminance control circuit 36 that is a circuit are mounted on the circuit board 18.

Next, the circuit elements of the luminance control circuit 36 will be described with reference to Fig. 7.

The luminance control circuit 36 controls the luminances of both the right and left backlights 17r and 17l. The luminance control circuit 36 consists broadly of an absolute luminance control circuit 36a that controls absolute luminances and a luminance balance control circuit 36b that controls the balance of the right and left luminances.

Bias current transferred as an analog signal from the LCD driver 35 flows into the base B of a transistor Q1 via a resistor R1. The emitter E of the transistor Q1 is grounded via a resistor R2. The absolute luminance control circuit 36a consists of the resistors R1 and R2 and transistor Q1.

On the other hand, the collector C of the transistor Q1 is connected in series with LEDs (D1 and D2) that glow when receiving power from a power supply Vcc. One of the LEDs (D1 and D2) is associated with the LED 17b that is included in the backlight 17l and shown in Fig. 5. The other LED (D1 or D2) is associated with the LED 17b included in the backlight 17r.

The collector C of the transistor Q1 is also connected to the luminance balance control circuit 36b.

The luminance balance control circuit 36b consists of a resistor R4, a variable resistor R3, a resistor R5, a transistor Q2, and a transistor Q3. The resistor R4, variable resistor R3, and resistor R5 are connected in series with one another. The transistor Q2 has a base B thereof connected to the variable resistor R3, a collector C thereof connected to the power supply Vcc, and an emitter E thereof connected between the LEDs (D1 and D2). The transistor Q3 has a base B thereof connected to the variable resistor R3, an emitter E thereof connected to the emitter E of the transistor Q2, and a collector C thereof connected to the collector C of the transistor Q1.

Thus, the LED (D1) is connected between the collector and emitter of the transistor Q2, and the other LED (D2) is connected between the collector and emitter of the transistor Q3.

Owing to the foregoing circuit elements, the balance of the luminances of the backlights 17 is controlled as described below.

To begin with, the relative balance of the luminances of the right and left backlights 17r and 17l is controlled by varying the resistance of the variable resistor R3 included in the luminance balance control circuit 36b under the control of the LCD driver 35. More particularly, the variable resistor R3 is varied in order to raise the potentials at the bases B of the transistors Q2 and Q3. This causes the potential at the emitter E of the transistor Q2 (or the emitter E of the transistor Q3) to rise. This leads to a decrease in the potential difference between the collector and emitter of the transistor Q2 between which the LED (D1) is connected. Eventually, the luminance of the LED (D1) decreases relatively.

In contrast, when the variable resistor R3 is varied in order to lower the potentials at the bases B of the transistors Q2 and Q3, the potential at the emitter E of the transistor Q2 (or the emitter E of the transistor Q3) drops. This leads to a decrease in the potential difference between the collector and emitter of the transistor Q3 between which the LED (D2) is connected. Eventually, the luminance of the LED (D2) decreases relatively.

As mentioned above, the relative luminances of the LEDs (D1 and D2) can be changed by varying the variable resistor R3.

Next, the absolute luminances of the right and left backlights 17r and 17l are changed simultaneously by varying the base current of the transistor Q1 included in the absolute luminance control circuit 36a.

Specifically, a bias current serving as an analog signal transferred from the LCD driver 35 is varied in order to vary the base current flowing through the resistor R1. The collector current of the transistor Q1 (or emitter current) increases with an increase in the base current. Consequently, the current flowing through the LEDs (D1 and D2) increases. Eventually, the luminances of the LEDs are raised simultaneously.

When the base current of the transistor Q1 is decreased, on the other hand, the collector current (or emitter current) of the transistor Q1 decreases. Consequently, the current flowing through the LEDs (D1 and D2) decreases. Eventually, the luminances of the LEDs are lowered.

As mentioned above, the absolute luminances of the LEDs (D1 and D2) are changed by varying the current flowing out from the LCD driver 35.

According to the present embodiment, since a white flat emissive backlight using an LED as a light source is adopted, power consumption can be reduced. Moreover, the necessity of a dedicated circuit board is avoided. This results in a compact and lightweight head-mounted image display device.

Furthermore, since the LED is used as a light source of a backlight, a circuit for controlling luminances is simplified. The luminance control circuit formed on a sole circuit board can control the luminances of both the right and left backlights. This contributes to realization of a compact and light head-mounted image display device.

Incidentally, the present invention is not limited to the aforesaid embodiment but a variety of variants or applied examples can be constructed within the gist of the present invention.

### Industrial Applicability

As described so far, according to the present invention, there is provided a head-mounted image display device that is more compact and consumes little power owing to the employment of a surface-luminescence illuminating means which adopts an LED as a light source.

Moreover, the surface-luminescence illuminating means can be freely mounted or dismounted on or from a circuit board. The surface-luminescence illuminating means can therefore be readily replaced with another in its repairs or the other occasions.

Furthermore, a control circuit for controlling the surface-luminescence illuminating means and a control circuit for controlling an image display means are mounted on a sole circuit board that is a rigid substrate. This obviates the necessity of including a plurality of circuit boards. Consequently, the head-mounted image display device can be designed more compactly.

Since a free-form surface prism optical system is adopted, the light is only reflected twice. Consequently, only a small amount of light is attenuated. This results in the compact and low-cost surface-luminescence illuminating means.

In addition, both the luminances of the surface-luminescence illuminating means opposed to the right and left eyes respectively can be controlled simultaneously using a luminance control circuit mounted on the circuit board. Moreover, the relative luminances thereof can also be controlled.

## Claims

1. A head-mounted image display device to be used to view images while being worn on the head, comprising:
an image display means for producing images according to a received video signal;
a surface-luminescence illuminating means that adopts an LED as a light source so as to radiate white illumination light on said image display means; and
an optical system for routing light, which represents images and is radiated from said image display means illuminated by said surface-luminescence illuminating means, to the user's eyes so that the images can be viewed.

2. A head-mounted image display device according to Claim 1, further comprising a circuit board on which a control circuit for controlling said surface-luminescence illuminating means is mounted, wherein:
said surface-luminescence illuminating means is connected to said circuit board through a connector over a flexible printed-circuit board.

3. A head-mounted image display device according to Claim 2, wherein a control circuit for controlling said image display means is mounted on said circuit board, and said circuit board is realized with a single rigid substrate.

4. A head-mounted image display device according to Claim 1, wherein said optical system is a prism optical system that has two reflecting surfaces including a reflecting surface that is a free-form surface.

5. A head-mounted image display device according to Claim 2, wherein:
said image display means and said surface-luminescence illuminating means each include a pair of means opposed to the right and left eyes; and
said control circuit includes a luminance control circuit for controlling the luminance of the surface-luminescence illuminating means opposed to the right eye and the luminance of the surface-luminescence illuminating means opposed to the left eye.

6. A head-mounted image display device according to Claim 5, wherein said luminance control circuit includes an absolute luminance control circuit for simultaneously controlling the luminance of the surface-luminescence illuminating means opposed to the right eye and the luminance of the surface-luminescence illuminating means opposed to the left eye.

7. A head-mounted image display device according to Claim 5, wherein said luminance control circuit includes a luminance balance control circuit for controlling the relative luminances of the surface-luminescence illuminating means opposed to the right and left eyes.
